(19)

Europäisches Patentamt
European Patent Office
Office européen des brevets

(11) **EP 4 316 826 A1**

(12) **EUROPEAN PATENT APPLICATION**
published in accordance with Art. 153(4) EPC

(43) Date of publication:
**07.02.2024 Bulletin 2024/06**

(21) Application number: **22775448.8**

(22) Date of filing: **18.03.2022**

(51) International Patent Classification (IPC):
*B32B 27/30* (2006.01)     *C08K 5/098* (2006.01)
*C08L 5/00* (2006.01)      *C08L 29/04* (2006.01)
*C08L 101/00* (2006.01)    *C09D 105/00* (2006.01)
*C09D 129/04* (2006.01)    *C08J 5/18* (2006.01)

(52) Cooperative Patent Classification (CPC):
**B32B 27/30; C08J 5/18; C08K 5/098; C08L 5/00;
C08L 29/04; C08L 101/00; C09D 105/00;
C09D 129/04**

(86) International application number:
**PCT/JP2022/012589**

(87) International publication number:
**WO 2022/202660 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021  JP 2021051818**

(71) Applicant: **Mitsubishi Chemical Corporation
Chiyoda-ku
Tokyo 100-8251 (JP)**

(72) Inventors:
• **KOBAYASHI Ryohei
Tokyo 100-8251 (JP)**
• **KANAMORI Yuya
Tokyo 100-8251 (JP)**

(74) Representative: **Vossius & Partner
Patentanwälte Rechtsanwälte mbB
Siebertstraße 3
81675 München (DE)**

(54) **RESIN COMPOSITION, COATING SOLUTION, FILM, AND MULTILAYER STRUCTURE**

(57)     Since having an excellent oxygen barrier property particularly under high humidity, a resin composition of the embodiment of the present disclosure provides a package material and a resin composition having an excellent gas barrier property, specifically an excellent oxygen barrier property, under high humidity. Provided is a resin composition containing: a hydrophilic resin; and a metal compound, wherein a mass ratio between a content of the hydrophilic resin and a content of the metal compound in terms of metal (a content of the hydrophilic resin : a content of the metal compound in terms of metal) is 90:10 to 20:80.

EP 4 316 826 A1

**Description**

TECHNICAL FIELD

The embodiment of the present disclosure relates to a resin composition, and more specifically, relates to a resin composition that can yield a film having a high gas barrier property under high humidity.

BACKGROUND ART

Hydrophilic resins such as a polyvinyl alcohol resin are formed into films and widely used as various package materials, specifically, package materials for foods, medicines, etc. that require inhibition of deterioration due to oxygen since having excellent strength, transparency, gas barrier property, etc.

The hydrophilic resin, however, is likely to be significantly affected by humidity since having many hydroxy groups, and the gas barrier property is considerably deteriorated under a high humidity environment.

As a film having an improved gas barrier property, PTL 1 discloses a material for a gas barrier film comprising: a water-hardly-soluble inorganic fine particle having an average particle diameter of not more than 500 nm; and a water-soluble or water-dispersible polymer compound, wherein the water-hardly-soluble inorganic fine particle is an ionic crystal synthesized by reacting: an inorganic compound containing one or more selected from aluminum, silicon, zinc, zirconium, silver, and tin as an essential component, or salts thereof; and one or more compounds selected from an organic acid, an inorganic acid, and salts thereof.

PTL 2 discloses a composition for forming a gas barrier layer comprising: a water-soluble polymer; at least one of a metal alkoxide, a hydrolyzed product thereof, and tin chloride; and a compound represented by the general formula $(R^1Si(OR^2)_3)_n$, wherein $R^1$ represents an organic functional group and $R^2$ represents $CH_3$, $C_2H_5$, or $C_2H_4OCH_3$.

Furthermore, PTL 3 discloses a method for manufacturing a gas barrier laminate comprising steps of: forming a coating on a surface of a substrate film or a laminate having the substrate film, the coating containing zinc ion, at least one of a metal alkoxide and a hydrolyzed product thereof, and a water-soluble polymer; and forming a gas barrier layer on the surface.

RELATED ART DOCUMENT

PATENT DOCUMENT

PTL 1: JP-A-2002-338821
PTL 2: JP-A-2016-221864
PTL 3: JP-A-2018-089567

SUMMARY

TECHNICAL PROBLEM

However, the gas barrier films disclosed in PTL 1, PTL 2, and PTL 3 have an insufficient gas barrier property under high humidity, and further improvement has been required.

In view of such foregoing, the present disclosure provides a resin composition having an excellent gas barrier property under high humidity, specifically an excellent oxygen barrier property, under high humidity.

SOLUTION TO PROBLEM

The inventors of the present disclosure have conducted intensive studies to solve the above problem, and consequently have found that the gas barrier property under high humidity tends to be improved by providing a humidity controlling step of leaving to stand a film under high humidity in a step of manufacturing the film using a resin composition containing a hydrophilic resin and a metal compound. In further earnest study, the inventors of the present disclosure have focused on a relationship between: a mass ratio of the hydrophilic resin and the metal compound; and the gas barrier property under high humidity, and consequently have found that the film having an excellent gas barrier property, specifically an oxygen barrier property, under high humidity can be obtained without the humidity controlling step by regulating the mass ratio within a specific range (a range of higher content rate of the metal compound than the conventional rate).

Specifically, the embodiment of the present disclosure provides the following [I] to [XIV].

[I] A resin composition, comprising: a hydrophilic resin; and a metal compound, wherein a mass ratio between a content of the hydrophilic resin and a content of the metal compound in terms of metal (a content of the hydrophilic resin : a content of the metal compound in terms of metal) is 90:10 to 20:80.
[II] The resin composition according to [I], wherein the hydrophilic resin is a polyvinyl alcohol resin.
[III] The resin composition according to [I], wherein the hydrophilic resin is a polysaccharide.
[IV] The resin composition according to any one of [I] to [III], wherein the metal compound is an organic acid metal salt.
[V] The resin composition according to [IV], wherein the organic acid metal salt is zinc acetate or a hydrate thereof.
[VI] A coating solution, comprising the resin composition according to any one of [I] to [V].
[VII] A film, comprising the resin composition according to any one of [I] to [V].
[VIII] The film according to [VII], wherein the film has an oxygen permeability under an environment at 23°C and 80% RH of not more than 80 cc·3-$\mu$m/m$^2$·day·atm.
[IX] The film according to [VII] or [VIII], wherein the film has a thickness of 0.1 to 20 $\mu$m.
[X] A multilayer structure, comprising at least one film layer composed of the film according to any one of [XII] to [IX].
[XI] The multilayer structure according to [X], wherein the film layer is a film layer formed by stacking two or more of the films according to any one of [VII] to [IX].
[XII] The multilayer structure according to [X] or [XI], wherein the film has a thickness of 0.1 to 20 $\mu$m.
[XIII] The multilayer structure according to any one of [X] to [XII], further comprising at least one layer composed of a substrate.
[XIV] A multilayer structure obtained by applying and drying the coating solution according to [VI] on a substrate.

ADVANTAGEOUS EFFECT

The embodiment of the present disclosure regulates, in the resin composition comprising the hydrophilic resin and the metal compound, a mass ratio between the content of the hydrophilic resin and the content of the metal compound in terms of metal (the content of the hydrophilic resin : the content of the metal compound in terms of metal) within the specific range. The embodiment of the present disclosure can provide the film having an excellent gas barrier property, specifically oxygen barrier property, under high humidity without requiring the humidity controlling step.

DESCRIPTION OF EMBODIMENTS

Hereinafter, embodiments of the present disclosure will be specifically described, but the present disclosure is not limited thereto.
A resin composition according to an embodiment of the present disclosure (hereinafter, which may be referred to as "the present resin composition") comprises a hydrophilic resin and a metal compound. Hereinafter, each component will be described.

<Hydrophilic Resin>

Specific examples of the hydrophilic resin used in the present resin composition include water-soluble resins such as a vinyl alcohol resin, a polysaccharide, an acrylic resin, and a polyether resin. The hydrophilic resin may be used alone or in combination of two or more.
The hydrophilic resin preferably has the following properties when formed into a film, for example.
That is, when a film with 30 $\mu$m in thickness is prepared by using the hydrophilic resin, and immersed and left to stand in water at 25°C for 2 hours, a rate of change in area is preferably not less than 105%. The rate of change in area can be determined by the following formula.

$$\text{Rate of change in area (\%)} = \text{Film area after immersion} \, /$$

$$\text{Film area before immersion} \times 100$$

Hereinafter, the specific hydrophilic resin will be described in detail.

<Vinyl Alcohol Resin>

The vinyl alcohol resin typically excludes resins known as an ethylene-vinyl alcohol copolymer resin (ethylene content is 20 to 60 mol %), and examples of the vinyl alcohol resin include a polyvinyl alcohol (hereinafter, referred to as "PVA") resin.

The PVA resin is typically preferably an unmodified PVA resin, but a modified PVA resin may be used.

The unmodified PVA resin can be typically manufactured by polymerizing a vinyl ester monomer, and then saponifying the polymer.

The modified PVA resin can be manufactured by saponifying a polymer of a vinyl ester monomer and another unsaturated monomer, or post-modifying the unmodified PVA resin.

Examples of the vinyl ester monomer include: aliphatic vinyl esters, such as vinyl formate, vinyl acetate, vinyl propionate, vinyl valerate, vinyl butyrate, vinyl isobutyrate, vinyl pivalate, vinyl caprate, vinyl laurate, vinyl stearate, vinyl versatate, and vinyl trifluoroacetate; and aromatic vinyl esters, such as vinyl benzoate. Among these, the vinyl ester monomer is preferably an aliphatic vinyl ester having 3 to 20, more preferably 4 to 10, particularly preferably 4 to 7, carbon atoms, and still particularly preferably vinyl acetate. These monomers are typically used singly, but a plurality of types thereof may be simultaneously used as necessary.

Examples of the other unsaturated monomer include: olefins, such as ethylene, propylene, isobutylene, α-octene, α-dodecene, and α-octadecene; unsaturated acids, such as acrylic acid, methacrylic acid, crotonic acid, maleic acid, maleic anhydride, and itaconic acid, or a salt thereof or a mono- or di-alkyl ester thereof; nitriles, such as acrylonitrile and methacrylonitrile; amides, such as acrylamide and methacrylamide; olefinsulfonic acids, such as ethylenesulfonic acid, allylsulfonic acid, and metallylsulfonic acid, or a salt thereof; alkyl vinyl ethers; N-acrylamidomethyltrimethylammonium chloride, allyltrimethylammonium chloride, dimethylallyl vinyl ketone, N-vinylpyrrolidone, vinyl chloride, vinylidene chloride; polyoxyalkylene (meth)allyl ethers, such as polyoxyethylene (meth)allyl ether and polyoxypropylene (meth)allyl ether; polyoxyalkylene (meth)acrylates, such as polyoxyethylene (meth)acrylate and polyoxypropylene (meth)acrylate; polyoxyalkylene (meth)acrylamides, such as polyoxyethylene (meth)acrylamide and polyoxypropylene (meth)acrylamide; polyoxyethylene (1-(meth)acrylamido-1,1-dimethylpropyl) ester, polyoxyethylene vinyl ether, polyoxypropylene vinyl ether, polyoxyethyleneallylamine, polyoxypropyleneallylamine, polyoxyethylenevinylamine, and polyoxypropylenevinylamine. These monomers may be used alone or in combination of two or more. Note that, the "(meth)allyl" means allyl or methallyl, the "(meth)acrylate" means acrylate or methacrylate, and the "(meth)acryl" means acryl or methacryl, respectively.

The PVA resin can be obtained by any known polymerization methods, saponification methods, and post-modification methods.

The introduction amount of the other unsaturated monomer and the modification amount by the post-modification are appropriately set according to the type of the monomer, and are typically not more than 15 mol %, and particularly not more than 10 mol %. An excessively high introduction amount and modification amount tend to decrease crystallinity of the PVA resin to decrease the gas barrier property when the resin is formed into a film.

The average saponification degree of the PVA resin is typically 70 to 100 mol %, preferably 80 to 100 mol %, particularly preferably 85 to 100 mol %, and further preferably 90 to 99.99 mol %. An average saponification degree of less than 70 mol % tends to increase the oxygen permeability under high humidity. The average saponification degree is measured in conformity with JIS K 6726.

The average polymerization degree of the PVA resin is typically 100 to 4,000, preferably 125 to 3,000, particularly preferably 150 to 2,500, still particularly preferably 200 to 2,250, and most preferably 250 to 2,000. An excessively low average polymerization degree tends to deteriorate mechanical properties such as film strength, and an excessively high average polymerization degree tends to cause poor operability such as difficulty in forming an aqueous solution. The average polymerization degree is measured in conformity with JIS K 6726.

As the PVA resin, two or more thereof having different modification types, modification amounts, average saponification degrees, average polymerization degrees, etc. may be used in combination.

<Polysaccharide>

Examples of the polysaccharide include starches, celluloses, and N-acetylglucosamine derivatives.

Examples of the starches include: natural starches, such as corn starch and potato starch; and modified starches, such as an etherified starch, an esterified starch, a crosslinked starch, a grafted starch, a roasted dextrin, an enzyme-modified dextrin, an alpha-starch, and an oxidized starch.

Examples of the celluloses include carboxymethylcellulose, methylcellulose, ethylcellulose, hydroxymethylcellulose, hydroxypropylmethylcellulose, hydroxyethylcellulose, hydroxyethylmethylcellulose, hydroxypropylcellulose, nitrocellulose, and a cationized cellulose, and metal salts thereof such as a sodium salt.

Examples of the N-acetylglucosamine derivatives include chitin, chitosan, and chitosan derivatives. Examples of the chitosan derivatives include a hydroxyalkylchitosan, a carboxyalkylchitosan, a carboxyacylchitosan, succinyl chitosan, and a cationized chitosan.

<Acrylic Resin>

Examples of the acrylic resins include polyacrylamide, polyacrylic acid, and a metal salts thereof such as a sodium salt.

<Polyether resin>

Examples of the polyether resin include polyethylene glycol and polypropylene glycol.

Among the hydrophilic resins, the vinyl alcohol resins and saccharides are preferable, the PVA resin, the modified starches (particularly, soluble starches), hydroxypropylmethylcellulose, and chitosan are more preferable, and the unmodified PVA resin and chitosan are most preferable in terms of the excellent oxygen barrier property under high humidity.

<Metal Compound>

Preferable as the metal compound used in the present resin composition are those having a layered structure in which specific structural units are stacked with a specific surface interval.

The structural unit contains a metal, a hydroxy ligand, and an anionic ligand other than a hydroxy ligand, and represented by the following chemical formula (1),

$$M_a(OH)_b A^{n-}{}_{(2a-b)/n} \cdots \qquad (1)$$

wherein M represents the metal species, and "A" represents the "n-"-valent anionic ligand other than the hydroxy ligand. "A" excludes O (oxo ligand). "n" represents an integer of not less than 1. "a" and "b" represent numbers of more than 0, and satisfy $a/b = 0.1$ to 10.

In the chemical formula (1), examples of M include Na, K, Ca, Mg, Si, Al, Ti, Cr, Mn, Fe, Co, Ni, Cu, and Zn. These metal species may be contained alone, or two or more thereof may be contained. Among these, Al, Si, Mg, Ni, Co, and Zn are preferable, Ni, Co, and Zn are particularly preferable, and Zn is still particularly preferable, in terms of the excellent oxygen barrier property under high humidity.

In the chemical formula (1), Examples of "A" include RO (alkoxy ligand), ROCO (carboxylic acid ligand), $CO_3$, NOs, $SO_3$, $PO_4$, $BO_3$, F, Br, and Cl (R represents an alkyl chain typically represented by the chemical formula $C_mH_{2m+1}$; m = 1 to 20. The alkyl chain may have a functional group such as a OH group as long as it does not impair the effect of the embodiment of the present disclosure.). Note that, A excludes O (oxo ligand). These anionic ligands may be contained alone, or two or more thereof may be contained. Among these, NOs, Cl, RO, and ROCO are preferable, ROCO is particularly preferable, and specifically, $CH_3OCO$ is still particularly preferable, from the viewpoint of interaction with the hydrophilic resin.

The metal compound used in the present resin composition may contain a water molecule.

The metal compound preferably exhibits a main peak of X-ray diffraction within $2\theta = 2$ to $15°$ when measured by wide-angle X-ray diffraction using $CuK\alpha$ radiation. The metal compound further preferably exhibits the main peak within $2\theta = 2$ to $9°$, and particularly preferably exhibits the main peak within $2\theta = 3$ to $8°$.

The wide-angle X-ray diffraction is measured under the following condition, for example.

<Measurement Condition>

- Used apparatus: D8 DISCOVER (manufactured by Bruker Japan)
- Detector: Two-dimensional detector VANTEC-500 (manufactured by Bruker Japan)
- Voltage: 50 kV
- Current: 100 mA
- Camera length: 100 mm
- Measurement method: Reflective
- Integration time: 30 minutes
- Wavelength: $CuK\alpha$ radiation ($K\alpha1$ and $K\alpha2$ are not separated)
- Detector position: $2\theta = 10°$
- X-ray incident angle: $\theta = 0.3°$
- Condition for making in one dimension in $2\theta$ direction: $2\theta = 0$ to $35°$, Azimuth angle (chi) = -95 to -85°
- Making in one dimension in azimuth angle direction:

Azimuth angle (chi) = -180 to 0°

Making in one direction in the azimuth angle direction is performed within a range of 1.0° so that a peak with the highest diffraction intensity is contained within a range of $2\theta$ = 2 to 15°. In this time, when a peak is observed within an azimuth angle of -180 to 0°, a diffraction peak is judged to be observed within a range of $2\theta$ = 2 to 15°. For example, when a diffraction peak is observed at $2\theta$ = 6.8°, and a peak is observed within a range of azimuth angle = -180 to 0° with making in one dimension within a range of $2\theta$ = 6.0 to 7.0° in the azimuth angle direction, a diffraction peak is judged to be observed within the range of $2\theta$ = 2 to 15°.

An interlayer distance (distance between one layer and another layer) of the metal compound is preferably 0.01 to 50 nm, and more preferably 0.1 to 30 nm, in terms of interaction with the hydrophilic resin molecule and the water molecule. The interlayer distance of the metal compound can be calculated with the Bragg's formula based on the diffraction position of the peak having the highest intensity within the range of $2\theta$ = 2 to 15° with the X-ray diffraction analysis.

A molecular weight of the layered structural unit peeled from the metal compound is preferably 100 to 10,000, and particularly preferably 200 to 2,000, in terms of ability to interact with the hydrophilic resin at a molecular level.

The layered structural unit is preferably hydrophilic in terms of the interaction with the hydrophilic resin molecule.

In addition, the layered structural unit is preferably not decomposed by leaving to stand under an environment at 20°C and 90% RH for 1,000 hours.

Specific examples of the metal compound include a layered compound containing Zn as the metal species. Among these, a Zn-containing layered compound represented by the chemical formula $[Zn_5(OH)_8(CH_3CO_2)_2 \cdot 2H_2O]$ is preferable in terms of the excellent oxygen barrier property under high humidity.

In the embodiment of the present disclosure, it is presumed that the metal compound and the hydrophilic resin are interacted to increase polarity of the hydrophilic resin, which yields the effect of the excellent oxygen barrier property under high humidity.

The metal compound can be obtained by: (I) a method of reacting a metal-containing compound under a base; (II) a method of reacting a metal-containing compound with heating; (III) a method of reacting a metal-containing compound with stirring; etc., for example.

Examples of the metal-containing compound used in each of the above methods include organic acid metal salts and inorganic metal salts.

Examples of an organic acid constituting the organic acid metal salt include: monovalent carboxylic acids, such as acetic acid; divalent carboxylic acids, such as succinic acid, oxalic acid, and tartaric acid; and tri- or more valent carboxylic acids, such as citric acid and ethylenediaminetetraacetic acid. These acids may be used alone or in combination of two or more. The organic acid metal salt may be a hydrate or an anhydride.

The organic acid metal salt is preferably a monovalent carboxylic acid metal salt, particularly preferably acetic acid metal salt, and still particularly preferably zinc acetate or a hydrate thereof, in terms of the excellent oxygen barrier property under high humidity.

Examples of the inorganic metal salt include fluorides, chlorides, bromides, iodides, and oxo acids of the metals. These salts may be used alone or in combination of two or more. The inorganic metal salt may be a hydrate or an anhydride.

The inorganic metal salt is preferably a chloride or oxo acid of the metal, and particularly preferably zinc chloride or zinc nitride, or a hydrate thereof, in terms of the excellent oxygen barrier property under high humidity.

Hereinafter, each method will be described in detail.

<Method (I)>

The method (I) is a method of reacting the metal-containing compound under a base.

Examples of the base used in the method (I) include hydroxides of alkali metals or alkali earth metals. Among these, hydroxides of alkali metals are preferable, and sodium hydroxide is particularly preferable, in terms of excellent reactivity with the metal-containing compound.

Typically, for the reaction between the metal-containing compound and the base, the metal-containing compound and the base may be mixed to be reacted in a solution.

The method for mixing the metal-containing compound and the base is not particularly limited, and examples thereof include: a method of mixing a solution dissolving the metal-containing compound and a solution dissolving the base; and a method of mixing a slurry liquid dispersing the metal-containing compound and a solution dissolving the base.

Among these, a method of mixing a solution dissolving the metal-containing compound and a solution dissolving the base is preferable in terms of reaction efficiency. Specifically, preferable when the organic acid metal salt is used as the metal-containing compound is a method of adding a solution dissolving the organic acid metal salt into a solution dissolving the base to be mixed. Preferable when the inorganic metal salt is used is a method of adding a solution dissolving the base into a solution dissolving the inorganic metal salt to be mixed.

A solvent for dissolving the metal-containing compound and the base is not particularly limited as long as it can dissolve the metal-containing compound and the base, and examples thereof include: water; and lower alcohols having 1 to 5 carbon atoms, such as methanol, ethanol, 1-propanol, 2-propanol, 1-butanol, and 2-butanol. These solvents may be used alone or in combination of two or more. Among these, water is preferable in terms of easiness of aftertreatment.

A concentration of the metal-containing compound in the solution dissolving the metal-containing compound is typically 0.5 to 3 mol/L, and preferably 1 to 2 mol/L.

A concentration of the base in the solution dissolving the base in the solvent is typically 0.01 to 100 mol/L, preferably 0.1 to 30 mol/L, and particularly preferably 1 to 10 mol/L.

If the concentrations of the metal-containing compound and the base are much lower than the above ranges, the reaction tends not to proceed sufficiently. If the concentrations of the metal-containing compound and the base are much higher than the above ranges, a side reaction tends to occur.

A mole ratio between the metal-containing compound and the base (metal-containing compound : base) is typically 0.5:2 to 2:0.5, preferably 0.8:1.5 to 1.5:0.8, and particularly preferably 0.9:1.2 to 1:1. If the mole ratio is out of the above range, the reaction tends not to proceed sufficiently.

A pH in the reaction between the metal-containing compound and the base is typically 4 to 9, and preferably 5 to 8. If the pH is much lower than the above range, the reaction tends not to proceed sufficiently. If the pH is much higher than the above range, the generated metal compound tends to be decomposed. The pH is regulated by regulating use amounts of the solution dissolving the metal-containing compound and the solution dissolving the base.

A reaction temperature of the reaction is typically 15 to 60°C, and preferably 20 to 40°C. If the reaction temperature is excessively low, the reaction tends not to proceed sufficiently. If the reaction temperature is excessively high, the metal-containing compound is decomposed by heat, which tends to fail to obtain the target metal compound.

The reaction time is typically 0.5 to 5 hours, and preferably 1 to 3 hours, and the reaction may be performed at a normal pressure.

After the reaction, the metal compound is obtained as a precipitate. The obtained metal compound may be used as it is, but the metal compound is preferably purified with washing, crushing procedure, etc. to use.

<Method (II)>

The method (II) is a method of reacting the metal-containing compound with heating.

The method (II) is typically performed by heating a solution dissolving the metal-containing compound with stirring.

As a solvent for dissolving the metal-containing compound, the solvents listed in the method (I) can be used. Among these, the solvent is preferably water or alcohols, particularly preferably water or lower alcohols having 1 to 5 carbon atoms, and further preferably water or ethanol.

As the heating condition, the solution may be heated to a temperature of typically 20 to 100°C, preferably 50 to 95°C, and particularly preferably 70 to 90°C.

The reaction time is typically 0.1 to 10 hours, preferably 0.5 to 7 hours, and particularly preferably 1 to 5 hours. A pressure of the reaction may be a normal pressure.

A rotation speed of the stirring is typically 10 to 5,000 rpm, preferably 100 to 2,500 rpm, and particularly preferably 300 to 2,000 rpm.

After the reaction, the metal compound is obtained as a precipitate. The obtained metal compound may be used as it is, or the metal compound may be purified with washing, crushing procedure, etc. to use.

<Method (III)>

The method (III) is a method of reacting the metal-containing compound with stirring.

The method (III) is typically performed by stirring a solution dissolving the metal-containing compound.

As a solvent for dissolving the metal-containing compound, the solvents listed in the method (I) can be used. Among these, the solvent is preferably water or alcohols, particularly preferably water or lower alcohols having 1 to 5 carbon atoms, and further preferably water or ethanol.

As a temperature condition in the (III), a temperature of the solution is typically 10 to 25°C, preferably 15 to 25°C, and particularly preferably 20 to 25°C.

The reaction time (stirring time) is typically 0.5 to 60 minutes, preferably 1 to 30 minutes, and particularly preferably 1 to 10 minutes. A pressure of the reaction may be a normal pressure.

A rotation rate of the stirring is typically 100 to 20,000 rpm, preferably 1,000 to 10,000 rpm, and particularly preferably 2,000 to 8,000 rpm.

After the reaction, the metal compound is obtained as a precipitate. The obtained metal compound may be used as it is, or the metal compound may be purified with washing, crushing procedure, etc. to use.

Metal compounds typically refers to metal salts, metal oxides, metal complexes, metal single substances, alloys, etc., for example, but the metal compound obtained by each of the methods is the metal layered compound having the structure in which the layered structural units represented by the chemical formula (1) are stacked with the specific surface interval, as noted above. This metal layered compound is presumed to peel the layers of the metal compound when the hydrophilic resin molecule and the water molecule are present around the metal compound, this peeled fine layered structural unit interacts with the hydrophilic resin at a molecular level, and consequently yields the excellent oxygen barrier property.

<Other Components>

The present resin composition may contain blending agents commonly blended into a resin composition within a range not impairing the effect of the embodiment of the present disclosure. Examples thereof include a thermal stabilizer, an oxidation inhibitor, an antistatic agent, a colorant, an ultraviolet-ray absorbent, a lubricant, a plasticizer, a light stabilizer, a surfactant, an antibacterial agent, a desiccative, an anti-blocking agent, a flame retardant, a crosslinker, a curing agent, a foaming agent, a crystal nucleus agent, an antifogging agent, an additive for biodegradation, a silane-coupling agent, an oxygen absorbent. These additives may be used alone or in combination of two or more.
The present resin composition can be obtained by mixing the hydrophilic resin, the metal compound, and other components as necessary.

<The Present Resin Composition>

The present resin composition comprises the hydrophilic resin and the metal compound. Since the mass ratio between the content of the hydrophilic resin and the content of the metal compound in terms of metal (the content of the hydrophilic resin : the content of the metal compound in terms of metal) is set to be 90:10 to 20:80, the gas barrier property, specifically oxygen barrier property, under high humidity when the resin composition is formed into a film becomes excellent. From the viewpoint of further improvement of the gas barrier property, specifically oxygen barrier property, under high humidity, the mass ratio between the content of the hydrophilic resin and the content of the metal compound in terms of metal (the content of the hydrophilic resin : the content of the metal compound in terms of metal) is preferably 85:15 to 30:70, and may be 83:17 to 55:45. If the content rate of the metal compound is excessively low or excessively high, the oxygen barrier property under high humidity tends to decrease.
When the resin composition contains a plurality of the metal compounds containing different metal species, a total amount of all the metal compounds (total amount of values in terms of metal) contained in the resin composition is specified as the content.
The content of the metal compound can be determined by a standard addition method using ICP-MS.
The present resin composition is extremely useful in terms of ability to provide a film having excellent gas barrier property, specifically oxygen barrier property, under high humidity without requiring the humidity controlling step. That is, according to the finding by the inventors of the present disclosure, the gas barrier property under high humidity tends to be improved by providing the humidity controlling step of leaving to stand a film under high humidity for a predetermined time in a step of manufacturing a film using the resin composition containing the hydrophilic resin and the metal compound. In the embodiment of the present disclosure, the film having an excellent gas barrier property under high humidity can be obtained without the step of leaving to stand under high humidity by regulating the mass ratio between the content of the hydrophilic resin and the content of the metal compound in terms of metal (the content of the hydrophilic resin : the content of the metal compound in terms of metal) within the specific range. Therefore, the present resin composition is extremely useful. A principle of unnecessity of the humidity controlling step of leaving to stand under high humidity in the embodiment of the present disclosure is unclear, but this is presumably because an increased amount of the metal compound dispersed in the film interacts with the hydrophilic resin, or improves efficiency of localization on the film surface.
An embodiment of the present disclosure preferably provides, for example, a method for manufacturing a film by using a resin composition comprising the hydrophilic resin and the metal compound, the method comprising: a preparing step of preparing the resin composition in which a mass ratio between a content of the hydrophilic resin and a content of the metal compound in terms of metal (the content of the hydrophilic resin : the content of the metal compound in terms of metal) is 90:10 to 20:80; and a film-forming step of forming a film using the resin composition, wherein the method does not includes a humidity controlling step of leaving to stand the film obtained in the film-forming step under high humidity for a predetermined time.
The "under high humidity" means 20±5°C and 90±10% RH. The "predetermined time" of leaving to stand under the high humidity means not shorter than 70 hours, particularly not shorter than 300 hours, and still particularly not shorter than 600 hours. An upper limit of the predetermined time is typically 1,000 hours.
In the step of manufacturing the film according to an example of the embodiment of the present disclosure, the humidity regulating step of leaving to stand under high humidity is unnecessary, but the film may be manufactured via the humidity regulating step.

The mass ratio between the content of the hydrophilic resin and the content of the metal compound (the content of the hydrophilic resin : the content of the metal compound) in the present resin composition is 82:18 to 8:92, and preferably 80:20 to 10:90 from the viewpoint of further improvement of the gas barrier property, specifically the oxygen barrier property, under high humidity.

A total content of the content of the hydrophilic resin and the content of the metal compound used in the present resin composition is typically not less than 80 mass%, preferably not less than 85 mass%, particularly preferably not less than 90 mass%, further preferably not less than 95 mass%, and most preferably not less than 98 mass%, relative to the total amount of the resin composition. An upper limit thereof is typically 100 mass%.

<Film Containing the Present Resin Composition>

The film containing the present resin composition is a film obtained by forming the present resin composition into a film.

Examples of a method for forming the film include: a method of using a coating solution in a solution or dispersion state of the present resin composition; and a method of melt-molding a pellet composition containing the present resin composition using an extruder. Among these, a method of using the coating solution is preferable. A solid-content concentration when the coating solution is used is typically 0.5 to 30 mass%, preferably 5 to 20 mass%, and may be 10 to 20 mass%.

Examples of methods for preparing the coating solution include: a method of collectively adding and mixing all the components into a solvent; and a method of adding, into a solution dissolving a part of the component in a solvent, the other components to be mixed. Among these, a method of adding, into a solution dissolving the hydrophilic resin in a solvent, the other component to be mixed is preferable in terms of operability.

In the method for obtaining the metal compound, the hydrophilic resin is preferably dissolved in the solvent in advance when the metal-containing compound is reacted, and this is particularly preferable when the metal compound is obtained by the method (II), in terms of operability.

As the solvent, the solvents listed in the description of the metal compound can be used. The solvent is preferably water or alcohols, particularly preferably water or lower alcohols having 1 to 5 carbon atoms, and further preferably water or ethanol. A content of the solvent relative to the total amount of the coating solution is, for example, not less than 50 mass%, and may be not less than 60 mass%, not less than 70 mass%, not less than 80 mass%, not less than 85 mass%, not less than 90 mass%, etc. An upper limit thereof is typically approximately 95 mass%.

As the film-forming method, known methods such as a melt-extruding method, an endless-belt method, a drum method, and a casting method in an applying method can be adopted, for example. Among these, a method with a casting method is preferable, and an applying method is particularly preferable.

Examples of the applying method include known methods such as a bar coater, roll coating, die coating, gravure coating, comma coating, and screen printing.

After the applying, the coating is dried by a heat treatment, etc. at, for example, 60 to 105°C for 0.5 to 10 minutes to obtain the film containing the resin composition. The film may be subjected to a stretching procedure such as a uniaxial stretching and biaxial stretching as necessary.

The film containing the present resin composition may be a single-layer film in which a number of the film containing the present resin composition is one, or may be a laminated film in which a number of the film containing the present resin composition is two or more (hereinafter, these may be referred to as "the present film").

A thickness of the present film is typically 0.1 to 200 $\mu$m, preferably 0.2 to 100 $\mu$m, particularly preferably 0.3 to 50 $\mu$m, and may be 0.5 to 40 $\mu$m, 0.5 to 30 $\mu$m, or 0.5 to 20 $\mu$m. The thickness of the laminated film is a thickness totaling each thickness of all the films constituting the laminated film.

An oxygen permeability of the present film is preferably, for example, not more than 80 cc·3$\mu$m/m$^2$·day·atm, not more than 70 cc·3-$\mu$m/m$^2$·day·atm, not more than 60 cc·3-$\mu$m/m$^2$·day·atm, not more than 50 cc·3-$\mu$m/m$^2$·day·atm, not more than 40 cc·3-$\mu$m/m$^2$·day·atm, not more than 30 cc·3-$\mu$m/m$^2$·day·atm, not more than 20 cc·3-$\mu$m/m$^2$·day·atm, and not more than 10 cc·3-$\mu$m/m$^2$·day·atm, in this order. The oxygen permeability is measured under an environment at 23°C and 80% RH, and a lower limit of the oxygen permeability is typically 0 cc·3-$\mu$m/m$^2$·day·atm.

In the embodiment of the present disclosure, the oxygen permeability can be determined with an oxygen permeability rate measuring apparatus.

The present film is useful in terms of excellent antibacterial property. An embodiment of the present film is preferably provided as a film comprising a resin composition containing a hydrophilic resin and a metal compound, wherein the resin composition has a mass ratio between a content of the hydrophilic resin and a content of the metal compound in terms of metal (a content of the hydrophilic resin : a content of the metal compound in terms of metal) of 90:10 to 20:80, and an antibacterial activity value measured in conformity with JIS Z2801:2010 on at least one of, preferably both of, Staphylococcus aureus and Escherichia coli is not less than 2. Among these, the film exhibiting the antibacterial activity value of not less than 3 is particularly preferable, and the film exhibiting the antibacterial activity value of not less than 4 is more preferable. An upper limit of the antibacterial activity value is not particularly limited, and typically approximately 10.

The mass ratio between the content of the hydrophilic resin and the content of the metal compound in terms of metal (the content of the hydrophilic resin : the content of the metal compound in terms of metal) is preferably 85:15 to 65:35.

A principle of the excellent antibacterial property of the film comprising the present resin composition is not unclear, but it is presumed that a hydroxide radical, etc. are generated from a compound produced by interaction of the hydrophilic resin and the metal element in the metal compound, which are blended at the specific mass ratio, to express the antibacterial property.

The film comprising the present resin composition has extremely excellent transparency, and this transparency is much more excellent than a film containing an inorganic layered compound or a filler. Specifically, the film comprising the present resin composition preferably has a haze of not more than 1%, more preferably not more than 0.6%, further preferably not more than 0.3%, and particularly preferably not more than 0.2%.

The haze is a HAZE value measured in conformity with a standard of JIS K7361-1. The haze is measured by cutting 10 sheets of specimen with 50 mm $\times$ 50 mm from the film and by using a haze meter (for example, NDH-4000, manufactured by NIPPON DENSHOKU INDUSTRIES CO., LTD.), and an average value of the 10 measurement results is specified as the haze (%), for example.

<Multilayer Structure>

The present film may be laminated to another film substrate, a paper substrate, etc. to form a multilayer structure. That is, the present film may be a multilayer structure having a layer composed of the present film (hereinafter, which may be referred to as "the present film layer") and a layer composed of a substrate such as a film substrate or a paper substrate (hereinafter, which may be referred to as a "substrate layer").

The present film layer may be a layer composed of a single-layer film in which a number of the film containing the present resin composition is one, or may be a layer composed of a laminated film in which a number of the film containing the present resin composition is two or more.

A thickness of the present film layer is typically 0.1 to 200 $\mu$m, preferably 0.2 to 100 $\mu$m, particularly preferably 0.3 to 50 $\mu$m, and may be 0.5 to 40 $\mu$m, 0.5 to 30 $\mu$m, or 0.5 to 20 $\mu$m.

Examples of the film substrate constituting the substrate layer include a film composed of a plastic resin. The plastic resin is not particularly limited, and examples thereof include: polyethylene resins, such as a linear low-density polyethylene, a low-density polyethylene, an ultra-low-density polyethylene, a medium-density polyethylene, a high-density polyethylene, an ethylene-propylene (block or random) copolymer, and an ethylene-$\alpha$-olefin (an $\alpha$-olefin having 4 to 20 carbon atoms) copolymer; polypropylene resins, such as polypropylene and a propylene-$\alpha$-olefin (an $\alpha$-olefin having 4 to 20 carbon atoms) copolymer; polyolefin resins in a broad sense including (unmodified) polyolefin resins, such as polybutene, polypentene, and a polycycloolefin resin (a polymer having a cycloolefin structure at at least one of a main chain and a side chain), and modified olefin resins such as an unsaturated-carboxylic-acid-modified polyolefin resin in which these polyolefins are graft-modified with an unsaturated carboxylic acid or an ester thereof; an ionomer, an ethylene-vinyl acetate copolymer, an ethylene-acrylic acid copolymer, an ethylene-acrylate ester copolymer, polyester resins, polyamide resins (including a copolymerized polyamide), polyvinyl chloride, polyvinylidene chloride, acrylic resins, polystyrene, vinyl ester resins, a polyester elastomer, a polyurethane elastomer, a polystyrene elastomer; halogenated polyolefins, such as chlorinated polyethylene and chlorinated polypropylene, and aromatic or aliphatic polyketones. These resins may be used alone or may in combination of two or more. These film substrates may be subjected to a surface treatment such as a corona treatment.

The paper substrate constituting the substrate layer is not particularly limited, and examples thereof include high-quality paper, medium-quality paper, coated paper, fine-coated paper, glassine paper, unbleached or bleached kraft paper (acidic paper or neutral paper), one-side glazed paper, kraft paper, paperboard (for corrugated board, for a building material, for white cardboard, for chip cardboard, etc.), white paperboard, and manila board, which have a basis weight of approximately 30 to 500 g/m$^2$. The paper substrate may contain additives such as a sizing agent and aluminum sulfate.

A pulp to constitute the paper substrate is not particularly limited, and any material commonly used for papermaking can be used. For example, usable are: chemical pulps, such as broad-leaved tree bleached kraft pulp (LBKP), needle-leaved tree kraft pulp (NBKP), broad-leaved tree sulfite pulp (LBSP), needle-leaved tree sulfite pulp (NBSP); and mechanical pulps, such as groundwood pulp (GP) and thermomechanical pulp (TMP); etc. Furthermore, non-wooden pulps, such as cotton, cotton linter, hemp, bagasse, kenaf, esparto, kozo (paper mulberry), mitsumata (paper birch), and ganpi; synthetic fibers, such as synthetic pulp, polyethylene, and polypropylene; and inorganic fibers can be used in combination as appropriate, as necessary.

A thickness of the multilayer structure according to an example of an embodiment of the present disclosure is typically 10 to 2000 $\mu$m, preferably 15 to 1000 $\mu$m, and particularly preferably 20 to 500 $\mu$m.

The present resin composition and the film obtained from the present resin composition are useful for a package material, and particularly preferably suitable for a package material for foods, medicines, etc.

EXAMPLES

Hereinafter, the embodiment of the present disclosure will be specifically described with Examples, but the present disclosure is not limited to the description of Examples without departing from the spirit thereof. Note that, "parts" and "%" in the examples mean a mass basis unless otherwise mentioned.

The following hydrophilic resins were prepared prior to Examples.

<Hydrophilic Resin>

PVA Resin

- PVA (Unmodified PVA resin, average polymerization degree: 1,700, average saponification degree: 99 mol %)

Polysaccharide

- Chitosan (Chitosan 10, manufactured by FUJIFILM Wako Pure Chemical Corporation)

<Example 1>

A water/ethanol solution (water/ethanol ratio = 60/40) containing 5.3% of $Zn(CH_3COO)_2 \cdot 2H_2O$ in terms of metal was produced, and subjected to a stirring treatment under a condition at a temperature of the solution of 23°C by using a homogenizer (T.K ROBOMIX, manufactured by Tokushu Kika Kogyo Co., Ltd.) at 3500 rpm for 3 minutes. Mixing 30 parts of the metal-compound-containing solution obtained as above and 70 parts of a 15% PVA aqueous solution was performed to prepare a solution of the resin composition (coating solution) (a solid-content concentration was 15%). Table 1 shows: a mass ratio of each component contained in the solution of the resin composition obtained as above; and a mass ratio between the content of PVA and the content of the metal compound in terms of metal [the content of PVA : the content of the metal compound in terms of metal] contained in the solution of the resin composition obtained as above.

The obtained solution of the resin composition was applied on a corona-treated surface of a PET substrate with 38 $\mu$m in thickness by using a wire bar #18, and the coating was dried at 120°C for 5 minutes to produce a bilayer film in which a film layer with 5.9 $\mu$m in thickness was stacked on the PET substrate.

<Example 2>

A solution of a resin composition was prepared (a solid-content concentration was 15%) to produce a film in the same manner as in Example 1 except that: the content of the metal-compound-containing solution was 40 parts; the content of the 15% PVA aqueous solution was 60 parts; and the thickness of the film layer stacked on the PET substrate was as shown in Table 1. Table 1 shows the mass ratio of each component contained in the solution of the resin composition obtained above, etc., similarly to Example 1.

<Example 3>

A solution of a resin composition was prepared (a solid-content concentration was 15%) to produce a film in the same manner as in Example 1 except that: the content of the metal-compound-containing solution was 50 parts; the content of the 15% PVA aqueous solution was 50 parts; and the thickness of the film layer stacked on the PET substrate was as shown in Table 1. Table 1 shows the mass ratio of each component contained in the solution of the resin composition obtained above, etc., similarly to Example 1.

<Example 4>

A solution of a resin composition was prepared (a solid-content concentration was 15%) to produce a film in the same manner as in Example 1 except that: the content of the metal-compound-containing solution was 60 parts; the content of the 15% PVA aqueous solution was 40 parts; and the thickness of the film layer stacked on the PET substrate was as shown in Table 1. Table 1 shows the mass ratio of each component contained in the solution of the resin composition obtained above, etc., similarly to Example 1.

<Example 5>

A solution of a resin composition was prepared (a solid-content concentration was 15%) to produce a film in the same manner as in Example 1 except that: the content of the metal-compound-containing solution was 70 parts; the content of the 15% PVA aqueous solution was 30 parts; and the thickness of the film layer stacked on the PET substrate was as shown in Table 1. Table 1 shows the mass ratio of each component contained in the solution of the resin composition obtained above, etc., similarly to Example 1.

<Example 6>

A solution of a resin composition was prepared (a solid-content concentration was 15%) to produce a film in the same manner as in Example 1 except that: the content of the metal-compound-containing solution was 80 parts; the content of the 15% PVA aqueous solution was 20 parts; and the thickness of the film layer stacked on the PET substrate was as shown in Table 1. Table 1 shows the mass ratio of each component contained in the solution of the resin composition obtained above, etc., similarly to Example 1.

<Example 7>

A solution of a resin composition was prepared (a solid-content concentration was 15%) to produce a film in the same manner as in Example 1 except that: the content of the metal-compound-containing solution was 90 parts; the content of the 15% PVA aqueous solution was 10 parts; and the thickness of the film layer stacked on the PET substrate was as shown in Table 1. Table 1 shows the mass ratio of each component contained in the solution of the resin composition obtained above, etc., similarly to Example 1.

<Example 8>

An aqueous solution containing 5.3% of $Zn(CH_3COO)_2 \cdot 2H_2O$ in terms of metal was produced, and subjected to a stirring treatment under a condition at a temperature of the solution of 23°C by using a homogenizer (T.K ROBOMIX, manufactured by Tokushu Kika Kogyo Co., Ltd.) at 3500 rpm for 3 minutes. Mixing 10 parts of this metal-compound-containing solution and 50 parts of a 3% chitosan aqueous solution was performed to prepare a solution of the resin composition (coating solution) (a solid-content concentration was 5%). Table 1 shows: a mass ratio of each component contained in the resin composition obtained as above; and a mass ratio between the content of chitosan and the content of the metal compound in terms of metal [the content of chitosan : the content of the metal compound in terms of metal] contained in the solution of the resin composition obtained as above.

The obtained solution of the resin composition was applied on a corona-treated surface of a PET substrate with 38 μm in thickness by using a wire bar #18, and the coating was dried at 80°C for 5 minutes to produce a bilayer film in which a film layer with 1 μm in thickness was stacked on the PET substrate.

<Example 9>

A solution of a resin composition was prepared (a solid-content concentration was 5.7%) to produce a film in the same manner as in Example 8 except that: the content of the metal-compound-containing solution was 15 parts; the content of the 3% chitosan aqueous solution was 50 parts; and the thickness of the film layer stacked on the PET substrate was as shown in Table 1.

Table 1 shows the mass ratio of each component contained in the solution of the resin composition obtained above, etc., similarly to Example 8.

<Comparative Example 1>

A solution of a resin composition was prepared (a solid-content concentration was 15%) to produce a film in the same manner as in Example 1 except that: the content of the metal-compound-containing solution was 0.7 parts; the content of the 15% PVA aqueous solution was 99.3 parts; and the thickness of the film layer stacked on the PET substrate was as shown in Table 1. Table 1 shows the mass ratio of each component contained in the solution of the resin composition obtained above, etc., similarly to Example 1.

<Comparative Example 2>

A solution of a resin composition was prepared (a solid-content concentration was 15%) to produce a film in the same manner as in Example 1 except that: the content of the metal-compound-containing solution was 4.7 parts; the content of the 15% PVA aqueous solution was 95.3 parts; and the thickness of the film layer stacked on the PET substrate was as shown in Table 1. Table 1 shows the mass ratio of each component contained in the solution of the resin composition obtained above, etc., similarly to Example 1.

<Comparative Example 3>

A solution of a resin composition was prepared (a solid-content concentration was 15%) to produce a film in the same manner as in Example 1 except that: the content of the metal-compound-containing solution was 10 parts; the content of the 15% PVA aqueous solution was 90 parts; and the thickness of the film layer stacked on the PET substrate was as shown in Table 1. Table 1 shows the mass ratio of each component contained in the solution of the resin composition obtained above, etc., similarly to Example 1.

<Comparative Example 4>

A solution of a resin composition was prepared (a solid-content concentration was 15%) to produce a film in the same manner as in Example 1 except that: the metal-compound-containing solution was not contained; the content of the 15% PVA aqueous solution was 100 parts; and the thickness of the film layer stacked on the PET substrate was as shown in Table 1.

Table 1 shows the mass ratio of each component contained in the solution of the resin composition obtained above, etc., similarly to Example 1.

<Wide-Angle X-Ray Diffraction (XRD) Measurement>

The films of Examples 1 to 9 and Comparative Examples 1 to 3 obtained above were subjected to a wide-angle X-ray diffraction (XRD) measurement under the following condition.

<Measurement Condition>

- Used apparatus: D8 DISCOVER (manufactured by Bruker Japan)
- Voltage: 50 kV
- Current: 100 mA
- Camera length: 150 mm
- Measurement method: Reflective
- Integration time: 20 minutes

As a result of the measurement, main peaks were detected at $2\theta$ = 6.8°, 13.5°, and 20.2° on the films of Examples 1 to 9 and Comparative Examples 1 to 3. These peaks were coincided with those of a Zn-containing layered compound described in Inorg. Chem. 2013, 52, 95-102, and thereby the metal compound contained in the films of Examples 1 to 9 and Comparative Examples 1 to 3 was identified as the Zn-containing layered compound $[Zn_5(OH)_8(CH_3CO_2)_2\cdot2H_2O]$.

Based on the diffraction position at $2\theta$ = 6.8°, which was the most intense peak in measuring the films of Examples 1 to 9 and Comparative Examples 1 to 3 by the wide-angle X-ray diffraction, an interlayer distance was calculated from a Bragg's formula. As a result, the Zn-containing layered compound $[Zn_5(OH)_8(CH_3CO_2)_2\cdot2H_2O]$ was a layered compound having an interlayer distance of 1.3 nm.

<Oxygen Barrier Property under High Humidity>

The film layer composed of the resin composition was taken from the bilayer films of Examples and Comparative Examples obtained above, and oxygen permeability of the taken film layer was measured by using an oxygen permeability measuring apparatus (OX-TRA100A, manufactured by AMETEK MOCON) under an environment at 23°C and 80% RH. Table 1 shows the results.

[Table 1]

| | Hydrophilic resin (A) [parts] | Metal compound (B) [parts]*1 | | (A): (B)*2 | Water [parts] | Ethanol [parts] | Film thickness [μm] | Oxygen barrier property [cc·3-μm/m²·day·at m] |
|---|---|---|---|---|---|---|---|---|
| | | | Content in terms of metal | | | | | |
| Ex. 1 | PVA 10.5 | 4.5 | 1.6 | 86:8: 13.2 | 74.8 | 10.2 | 5.8 | 8 |
| Ex. 2 | PVA 9 | 6 | 2.1 | 81.1: 18.9 | 71.4 | 13.6 | 4.6 | 8 |
| Ex. 3 | PVA 7.5 | 7.5 | 2.7 | 73.5: 26.5 | 68 | 17 | 1.7 | 4 |
| Ex. 4 | PVA 6 | 9 | 3.2 | 65.2: 34.8 | 64.6 | 20.4 | 4.9 | 9 |
| Ex. 5 | PVA 4.5 | 10.5 | 3.7 | 54.9: 45.1 | 61.2 | 23.8 | 1.8 | 7 |
| Ex. 6 | PVA 3 | 12 | 4.3 | 41.1: 58.9 | 57.8 | 27.2 | 2.3 | 10 |
| Ex. 7 | PVA 1.5 | 13.5 | 4.8 | 23.8: 76.2 | 54.4 | 30.6 | 2.3 | 5 |
| Ex. 8 | Chitosan 1.5 | 1.4 | 0.5 | 75.0: 25.0 | 57.1 | - | 1 | 3 |
| Ex. 9 | Chitosan 1.5 | 2.3 | 0.8 | 65.2: 34.8 | 61.2 | - | 1 | 2 |
| Comp. Ex. 1 | PVA 14.9 | 0.1 | 0.04 | 99.7: 0.3 | 84.7 | 0.3 | 10.2 | 100 |
| Comp. Ex. 2 | PVA 14.3 | 0.7 | 0.3 | 97.9: 2.1 | 83.3 | 1.7 | 7.4 | ≥200 |
| Comp. Ex. 3 | PVA 13.5 | 1.5 | 0.5 | 96.4: 3.6 | 81.6 | 3.4 | 5.6 | ≥200 |
| Comp. Ex. 4 | PVA 15 | - | - | - | 85 | - | 3 | 90 |

*1: The left column shows the content of the metal compound (B), and the right column shows the content thereof in terms of metal.

*2: Shown is a weight ratio between the content of the hydrophilic resin (A) and the content of the metal compound (B) in terms of metal.

As noted above, the film of each Example and each Comparative Example is manufactured without the humidity regulating step. As shown in Table 1, it is found that the film of each Example, which has the mass ratio between the content of the hydrophilic resin and the content of the metal compound in terms of metal within the specific range prescribed in the embodiment of the present disclosure, has an excellent oxygen barrier property under high humidity, and meanwhile, the film of each Comparative Example, which has the ratio out of the range, has a poor oxygen barrier property under high humidity.

Therefore, it is understood that the embodiment of the present disclosure yields the film having an excellent oxygen barrier property under high humidity without requiring the humidity regulating step.

<Antibacterial Property>

The solution (coating solution) of each resin composition of Examples 2 and 9 and Comparative Example 4 was applied on a PET film (Taiko Polyester Film FE2001, #38, manufactured by Futamura Chemical Co., Ltd.) by using a meyer bar so that the film thickness after drying became 4.6 $\mu$m in Example 2, 1.0 $\mu$m in Example 9, and 3.0 $\mu$m in Comparative Example 4, the coating was dried at 120°C for 5 minutes for forming the coating on the PET film to obtain a film for an antibacterial test. The film for an antibacterial test was subjected to the test in conformity with JIS Z 2801:2010, and Staphylococcus aureus and Escherichia coli were evaluated as follows. As a film for reference (unprocessed specimen), a PE film (polyethylene film) was used. Table 2 shows the results.

<Evaluation Criteria>

Very good: Antibacterial activity values for both the bacteria were not less than 2.
Good: An antibacterial activity value for only one bacterium was not less than 2.
Poor: Antibacterial activity values for both the bacteria were less than 2.

[Table 2]

|  | Antibacterial activity value | | Evaluation |
|---|---|---|---|
|  | Staphylococcus aureus | Escherichia coli |  |
| Example 2 | ≥4.9 | ≥6.2 | Very good |
| Example 9 | ≥4.9 | ≥6.2 | Very good |
| Comparative Example 4 | 1.1 | 4.7 | Good |

As in Table 2, it is found that the films of Examples 2 and 9, which have the mass ratio between the content of the hydrophilic resin and the content of the metal compound in terms of metal within the specific range prescribed in the embodiment of the present disclosure, have an excellent antibacterial property, and meanwhile, the film of Comparative Example 4, which contains no metal compound and thus has the ratio out of the range, has a rather poor antibacterial property.

As in the Table 1 and Table 2, Examples, which has the mass ratio between the content of the hydrophilic resin and the content of the metal compound in terms of metal within the specific range prescribed in the embodiment of the present disclosure, have not only the excellent oxygen barrier property under high humidity but also the excellent antibacterial property.

Although the specific configurations in the embodiment of the present disclosure have been demonstrated with the Examples, but the Examples are just mere examples, and not limitingly interpreted. It is contemplated that various modifications apparent to those skilled in the art could be made within the scope of the disclosure.

INDUSTRIAL APPLICABILITY

Since having the excellent oxygen barrier property particularly under high humidity, the resin composition of the embodiment of the present disclosure is useful as a package material, and specifically, the resin composition of the embodiment of the present disclosure can be suitably used as a package material for foods, medicines, etc.

**Claims**

1. A resin composition, comprising:

   a hydrophilic resin; and
   a metal compound, wherein
   a mass ratio between a content of the hydrophilic resin and a content of the metal compound in terms of metal (a content of the hydrophilic resin : a content of the metal compound in terms of metal) is 90:10 to 20:80.

2. The resin composition according to claim 1, wherein the hydrophilic resin is a polyvinyl alcohol resin.

3. The resin composition according to claim 1, wherein the hydrophilic resin is a polysaccharide.

4. The resin composition according any one of claims 1 to 3, wherein the metal compound is an organic acid metal salt.

5. The resin composition according to claim 4, wherein the organic acid metal salt is zinc acetate or a hydrate thereof.

6. A coating solution, comprising the resin composition according to any one of claims 1 to 5.

7. A film, comprising the resin composition according to any one of claims 1 to 5.

8. The film according to claim 7, wherein the film has an oxygen permeability under an environment at 23°C and 80% RH of not more than 80 cc·3·$\mu$m/m$^2$·day·atm.

9. The film according to claim 7 or 8, wherein the film has a thickness of 0.1 to 20 $\mu$m.

10. A multilayer structure, comprising at least one layer of a film layer composed of the film according to any one of claims 7 to 9.

11. The multilayer structure according to claim 10, wherein the film layer is a film layer formed by stacking two or more of the films according to any one of claims 7 to 9.

12. The multilayer structure according to claim 10 or 11, wherein the film has a thickness of 0.1 to 20 $\mu$m.

13. The multilayer structure according to any one of claims 10 to 12, further comprising at least one layer composed of a substrate.

14. A multilayer structure obtained by applying and drying the coating solution according to claim 6 on a substrate.

## INTERNATIONAL SEARCH REPORT

| International application No. |
|---|
| **PCT/JP2022/012589** |

### A. CLASSIFICATION OF SUBJECT MATTER

***B32B 27/30***(2006.01)i; ***C08K 5/098***(2006.01)i; ***C08L 5/00***(2006.01)i; ***C08L 29/04***(2006.01)i; ***C08L 101/00***(2006.01)i; ***C09D 105/00***(2006.01)i; ***C09D 129/04***(2006.01)i; ***C08J 5/18***(2006.01)i

FI:   C08L101/00; C08L29/04 A; C08J5/18 CEX; B32B27/30 102; C09D129/04; C09D105/00; C08L5/00; C08K5/098

According to International Patent Classification (IPC) or to both national classification and IPC

### B. FIELDS SEARCHED

Minimum documentation searched (classification system followed by classification symbols)

C08C19/00-19/44; C08F6/00-246/00; 301/00; C08K3/00-13/08; C08L1/00-101/14; C09D1/00-10/00; 101/00-201/10; B32B27/30; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2012-528255 A (FILLIGENT LTD.) 12 November 2012 (2012-11-12)<br>claims, paragraph [0112] | 1-2, 4-6, 14 |
| X | WO 2009/084191 A1 (TOTO LTD.) 09 July 2009 (2009-07-09)<br>claims, examples 5, 15 | 1, 4-6, 14 |
| X | JP 2018-89567 A (TOPPAN PRINTING CO., LTD.) 14 June 2018 (2018-06-14)<br>claims, paragraphs [0018], [0032], [0034], [0035], [0042], [0045], table 1, example 1 | 1-4, 6-14 |
| X | JP 2002-338821 A (MITSUI CHEMICALS, INC.) 27 November 2002 (2002-11-27)<br>claims, paragraphs [0050], [0057], [0058], [0061], [0062], [0072], tables 1, 2 | 1-3, 6-14 |
| X | WO 2020/203902 A1 (MITSUBISHI CHEMICAL CORP.) 08 October 2020 (2020-10-08)<br>claims, paragraphs [0017], [0041]-[0044], [0067], [0093], examples | 1-14 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/012589**

| Patent document cited in search report | | | Publication date (day/month/year) | Patent family member(s) | | | Publication date (day/month/year) |
|---|---|---|---|---|---|---|---|
| JP | 2012-528255 | A | 12 November 2012 | US | 2012/0060258 | A1 | |
| | | | | claims, paragraph [0133] | | | |
| | | | | EP | 2435139 | A1 | |
| | | | | CN | 102448550 | A | |
| | | | | KR | 10-2012-0065278 | A | |
| WO | 2009/084191 | A1 | 09 July 2009 | JP | 2010-13618 | A | |
| JP | 2018-89567 | A | 14 June 2018 | US | 2019/0283382 | A1 | |
| | | | | claims, paragraphs [0023], [0037], [0039], [0040], [0047], [0050], table 1, example 1 | | | |
| | | | | WO | 2018/101350 | A1 | |
| | | | | EP | 3549681 | A1 | |
| | | | | CN | 110022992 | A | |
| JP | 2002-338821 | A | 27 November 2002 | (Family: none) | | | |
| WO | 2020/203902 | A1 | 08 October 2020 | JP | 2020-164866 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002338821 A
- JP 2016221864 A
- JP 2018089567 A

**Non-patent literature cited in the description**

- *Inorg. Chem,* 2013, vol. 52, 95-102